# EUROPÄISCHE PATENTANMELDUNG

(11) **EP 1 106 466 A1**
(43) Veröffentlichungstag der Anmeldung: **13.06.2001**
(21) Anmeldenummer: 00250407.4
(22) Anmeldetag: 27.11.2000
(51) Int. Cl.: B60T 13/74, H02K 23/12, F16D 65/16, B60R 16/02

(54) **Elektromechanische Bremsanlage**

(30) Priorität: 09.12.1999 DE 19960611
(71) Anmelder: Volkswagen AG, 38436 Wolfsburg (DE)
(72) Erfinder: Witte, Bastian, Dr., 38179 Gr. Schwülper (DE)
(74) Vertreter: Effert, Bressel und Kollegen

(57) **Zusammenfassung**

Die Erfindung betrifft eine elektromechanische Bremsanlage, umfassend eine Anzahl von elektromechanischen Bremsen, denen jeweils mindestens ein Elektromotor zugeordnet ist und mindestens zwei unabhängige Spannungsversorgungen (6, 7), wobei die Erregerwicklungen (L1 - L3) der Elektromotoren entsprechend der Anzahl der unabhängigen Spannungsversorgungen unterteilt sind, wobei jeweils ein Teil der Erregerwicklung mit jeweils einer der Spannungsversorgungen verbindbar ist.

## Beschreibung

Die Erfindung betrifft eine elektromechanische Bremsanlage gemäß dem Oberbegriff des Patentanspruchs 1.

Eine derartige elektromechanische Bremsanlage ist beispielsweise aus der DE 195 37 464 A1 bekannt. Die elektromechanische Bremsanlage umfasst dabei beispielsweise vier Radbremsen, die den einzelnen Rädern eines Kraftfahrzeuges zugeordnet sind. Die Radbremsen sind über mechanische Verbindungen mit elektromotorischen Stelleinrichtungen verbunden. Aus Sicherheits- und Zuverlässigkeitsgründen ist das die Stelleinrichtungen mit Spannung versorgende elektrische Bordnetz redundant ausgebildet. Dabei sind jeweils die beiden zu einer Raddiagonalen gehörenden Radbremsen mit einer der beiden Batterien verbunden, wobei die entsprechenden Stelleinrichtungen aus der zugeordneten Batterie gespeist werden. Dadurch ist sichergestellt, dass auch bei Ausfall eines Bordnetzes der Kraftfahrzeugführer über die beiden verbleibenden Radbremsen des anderen Bordnetzes das Kraftfahrzeug abbremsen kann. Die grundsätzliche Funktionsweise einer solchen elektromechanischen Bremsanlage ist, dass ein elektronisches Steuergerät aus dem zugeführten Betätigungsgrad eines Bremspedals nach Maßgabe zusätzlicher Betriebsgrößen wie Radlasten, Bremsbelagverschleiß, Reifengröße, Batteriespannung etc. für jede Radbremse einen Sollwert darstellt, welcher ein Maß für die an der Radbremse einzustellende Bremswirkung repräsentiert. Reglereinheiten, die nach Maßgabe einer vorgegebenen Regelstrategie ein Ausgangssignal im Sinne einer Annäherung der Ist-Werte an die Sollwerte erzeugen, führen die Regelung der Bremswirkung auf den vorgegebenen Sollwert durch. Die Ist-Werte werden dabei entweder an den Radbremsen gemessen oder aus derart gemessenen Größen berechnet. Beispielsweise kann aus dem Strom durch den elektrischen Motor die Anpresskraft der Bremsbeläge bzw. das Antriebsmoment des Motors abgeleitet werden, das ein direktes Maß für die ausgeübte Bremswirkung an der entsprechenden Radbremse ist. Ferner kann durch Dehnungsmessstreifen oder andere geeignete Sensoren die ausgeübte Bremskraft gemessen und nach Maßgaben der Bremsauslegung das ausgeübte Bremsmoment bestimmt werden. Der Verdrehwinkel kann durch entsprechende Winkelsensoren an den Radbremsen ermittelt werden. Die Reglerausgangssignale für jede Radbremse setzt das elektronische Steuergerät in Ansteuersignale für die entsprechenden Stelleinrichtungen um. Je nach Ausführung des die elektrischen Stelleinrichtungen enthaltenden Motors, ob Schrittmotor, Kommutatormotor oder Motor mit elektronischer Kommutierung, stellt die Ansteuerungssignalgröße eine auszugebende Schrittzahl, ein Tastverhältnis, einen Spannungswert, einen Stromwert etc. dar. Nachteilig an der bekannten elektromechanischen Bremsanlage ist, dass bei Ausfall eines Bordnetzes durch die diagonale Bremswirkung das Kraftfahrzeug schief ziehen kann, falls die auftretenden Momente nicht genau ausgeglichen werden. Ferner erreicht das Kraftfahrzeug nur eine geringere maximale Abbremsung und damit einen verlängerten Bremsweg.

Aus der WO 97/36 117 ist eine elektromechanische Bremsanlage für Kraftfahrzeuge bekannt, mit einer eine Betätigungseinrichtung aufweisenden Reibungsbremse, welche von einem ersten Elektromotor betätigbar ist, wobei dem ersten Elektromotor ein zweiter Elektromotor zugeordnet ist, mit dem die Reibungsbremse lösbar ist. Die beiden Elektromotoren sind dabei an voneinander unabhängigen Spannungsversorgungen angeschlossen. Dabei wird wahlweise vorgeschlagen, dass die beiden Elektromotoren entweder derart ausgebildet sind, dass diese jeweils alleine die volle oder nur die halbe Bremskraft erzeugen. Zwar ist bei der Ausgestaltung mit der halben Bremskraft sichergestellt, dass auch bei Ausfall eines Bordnetzes das Kraftfahrzeug gleichmäßig abgebremst wird, jedoch beansprucht die Anordnung trotz der kleineren Auslegung der einzelnen Motoren erheblich Bauraum.

Der Erfindung liegt daher das technische Problem zugrunde, eine elektromechanische Bremsanlage zu schaffen, die eine hohe Sicherheit aufweist und kompakt aufgebaut ist.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Durch die Unterteilung der Erregerwicklungen entsprechend der Anzahl der unabhängigen Spannungsversorgungen, wobei jeweils ein Teil der Erregerwicklung mit einer der Spannungsversorgungen verbindbar ist, werden in einem Elektromotor mehrere voneinander unabhängige Motoren realisiert, die alle auf die gleiche mechanische Verbindung zur Radbremse wirken. Somit ist zum einen die Sicherheit ähnlich wie bei der WO 97/36 117 gewährleistet. Des weiteren erfolgt die Abbremsung auch bei Ausfall eines Bordnetztes stets gleichmäßig an allen Radbremsen, wobei nur der Bauraum jeweils eines Elektromotors benötigt wird.

In einer bevorzugten Ausführungsform erfolgt die Unterteilung der Erregerwicklung durch Abgriffe an einer durchgehenden Wicklung, wobei dann allerdings die Spannungsversorgungen auf unterschiedlichen Niveaus arbeiten müssen.

Daher erfolgt die Unterteilung in einer weiteren bevorzugten Ausführungsform durch separate Wicklungen, die über- oder ineinander gewickelt sind, wobei sich insbesondere bei der Ineinanderwicklung eine gleichmäßige Feldverteilung auch bei Ausfall einer Spannungsversorgung einstellt.

In einer weiteren bevorzugten Ausführungsform sind die Elektromotoren als elektronisch kommutierte Gleichstrommotoren ausgebildet. Von der Ausführung her handelt es sich um eine permanentmagnetisch erregte, also schleifringlose Synchronmaschine. Diese ist mit einem Rotorpositionssensor ausgebildet und wird von einer Steuer- und Leistungselektronik aus einem Gleichspannungsnetz versorgt. Der wesentliche Vorteil gegenüber anderen Gleichstrommotoren ist, dass der Kommutator und die Kohlebürsten durch die Elektronik ersetzt sind, so dass diese verschleißfrei arbeiten.

Die Erfindung wird nachfolgend anhand eines bevorzugten Ausführungsbeispiels näher erläutert. Die Fig. zeigen:
- Fig. 1: ein Prinzipschaltbild der Verschaltung eines elektronisch kommutierten Gleichstrommotors mit einer niedrigen Bordnetzspannung;
- Fig. 2: ein Prinzipschaltbild der Vorschaltung eines elektronisch kommutierten Gleichstrommotors mit zwei Bordnetzspannungen und geteilten Erregerwicklungen und
- Fig. 3: ein Prinzipschaltbild der Verschaltung eines elektronisch kommutierten Gleichstrommotors mit einer hohen Bordnetzspannung (Stand der Technik).

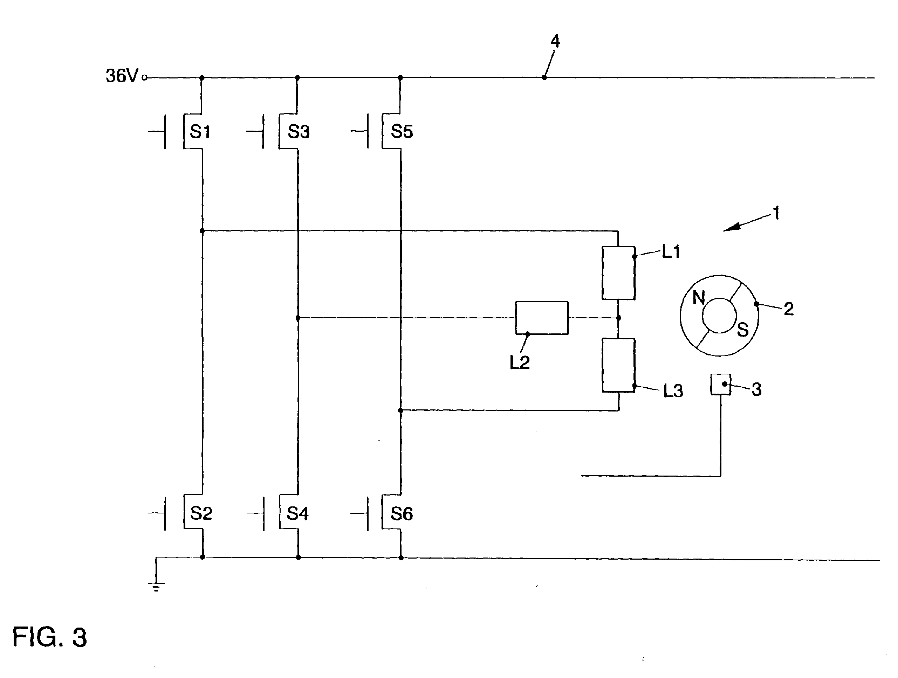

In der Fig. 3 ist ein Prinzipschaltbild eines elektronisch kommutierten Gleichstrommotors 1 dargestellt, wie dieser in bekannten elektromechanischen Bremsanlagen eingesetzt wird. Der Gleichstrommotor 1 umfasst einen Läufer 2, auf dem Permanentmagnete angeordnet sind, einen Rotorpositionssensor 3, eine Ständerwicklung und eine Steuer- und Leistungselektronik. Die Ständerwicklung ist hier durch drei sternförmig verschaltbare Induktivitäten L1 - L3 dargestellt. Die Leistungselektronik umfasst im wesentlichen sechs Leistungshalbleiterschalter S1 - S6, die vorzugsweise als Power-MOSFETs ausgebildet sind, wobei jeweils zwei Leistungshalbleiter zwischen der Gleichspannungsbordnetzspannung 4 und Masse 5 angeordnet sind. Zwischen den beiden Leistungshalbleitern ist jeweils ein Abgriff zugeordnet, der mit je einer der Induktivitäten L1 - L3 verbunden ist. Der Rotorpositionssensor 3 ist mit der nicht dargestellten Steuerelektronik verbunden, die läuferstellungsabhängig die sechs Leistungshalbleiter S1 - S6 und somit die Ströme in der Ständerwicklung schaltet. Die Ständerwicklung ist hier im Sinne der Erfindung als Erregerwicklung zu verstehen. Die Rotationsbewegung des Gleichstrommotors 1 wird dann über ein nicht dargestelltes Getriebe in eine mechanische Stellbewegung auf die Radbremse umgesetzt. Die elektrische Leistung des Gleichstrommotors 1 ist durch die Gleichspannungsbordnetzspannung 4 und den maximalen Stromfluss durch die Leistungshalbleiter S1 - S6 begrenzt. Die hohe Bordnetzspannung 4 von 36 oder 42 V wird dabei beispielsweise durch DC / DC-Wandler bzw. Hochsetzsteller aus einer 12 V bzw. 14 V Gleichspannung erzeugt, wobei die 12V die Nennspannung der Batterie und 14V die Ladespannung eines Generators bezeichnet. Ebenso kann der Generator direkt beispielsweise mit 42V die Spannungsversorgung darstellen.

Soll nun der elektronisch kommutierte Gleichstrommotor 1 mit einer niedrigen Bordnetzspannung betrieben werden, um beispielsweise die DC/DC-Wandler einzusparen, so muss zur Erzeugung der gleichen elektrischen Leistung die Stromstärke im selben Maße erhöht werden wie die Spannung erniedrigt wird. Die Stromstärke kann jedoch nicht beliebig erhöht werden, da die Stromtragfähigkeit der Leistungshalbleiter S1 - S6 begrenzt ist.

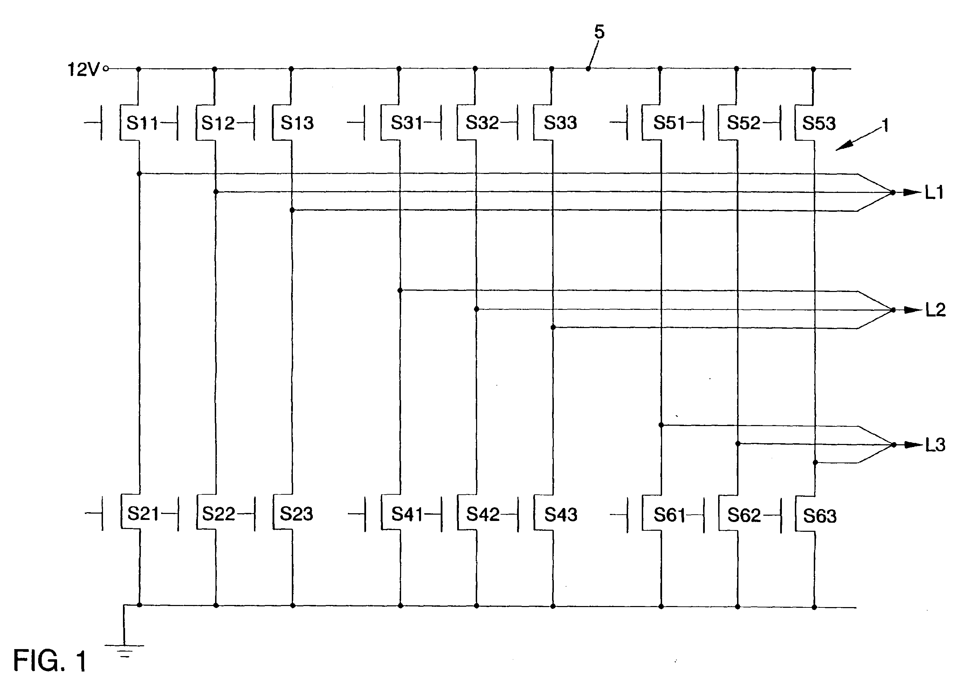

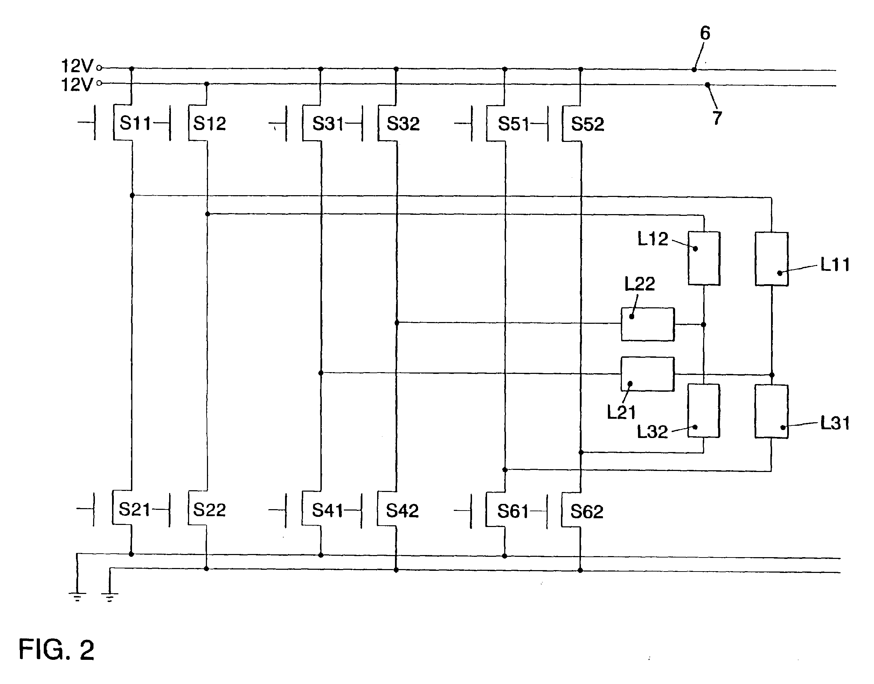

In der Fig. 1 ist die prinzipielle Verschaltung des elektronisch kommutierten Gleichstrommotors 1 bei einer 12V- Bordnetzspannung 5 dargestellt, wobei angenommen sei, dass die Stromtragfähigkeit gegenüber der Variante gemäß Fig. 3 unverändert ist. Da die Bordnetzspannung 5 nur noch ein Drittel der ursprünglichen Gleichspannungsbordnetzspannung 4 beträgt, muss entsprechend die Stromstärke verdreifacht werden. Hierzu müssen alle Leistungshalbleiter entsprechend dreifach parallel ausgebildet werden und synchron durch das Steuergerät geschaltet werden. Der Leistungsschalter S1 gemäß Fig. 3 wird daher durch die drei parallelen Leistungshalbleiter S11, S12 und S13 ersetzt. Entsprechendes gilt für die anderen Leistungshalbleiter S2 - S6. An den Induktivitäten L1 - L3 werden dann die drei separaten Strompfade verknüpft, so dass durch diese jeweils der dreifache Strom fließt. Wie jedoch leicht ersichtlich ist, ist dieses Schaltungsprinzip nicht wirtschaftlich , da sich einerseits die Anzahl der Leistungshalbleiter verdreifacht hat und zum anderen dadurch der Verdrahtungsaufwand entsprechend erhöht. Bei der Verwendung von Leistungshalbleitern mit der dreifachen Stromertragfähigkeit ergibt sich zwar eine Verschaltung gemäß Fig. 3, jedoch sind diese Leistungshalbleiter sehr teuer. In der Fig. 2 ist die erfindungsgemäße Verschaltung eines elektronisch kommutierten Gleichstrommotors 1 dargestellt, die zwei voneinander unabhängige Gleichspannungsbordnetze 6, 7 umfasst. Des weiteren umfasst die Schaltung zwölf Leistungshalbleiterschalter Sₘₙ, mit m = 1, ..6 und n = 1,2 und sechs Induktivitäten L_{m,n}, mit m = 1,2,3 und n = 1,2. Die Leistungshalbleiter Sₘ₁ sind mit dem Gleischspannungsbordnetz 6 analog der Schaltung gemäß Fig. 3 und die Leistungshalbleiter Sₘ₂ sind mit dem Gleichspannungsbordnetz 7 verschaltet. Die Erregerwicklungen, also die Ständerwicklungen des elektronisch kommutierten Gleichstrommotors 1 sind jeweils geteilt, wobei der eine Teil den Leistungshalbleiterschaltern Sₘ₁ und der andere Teil den Leistungshalbleitern Sₘ₂ zugeordnet ist, wobei die zugehörigen Teile jeweils wieder sternförmig miteinander verschaltet sind. Hierzu wird beispielsweise die Ständerwicklung L1 gemäß der Ausführung in Fig. 3 durch zwei separate Wicklungen L12 und L11 gebildet, die ineinandergewickelt sind. Entsprechendes gilt für die Ständerwicklungen L2 und L3. Die Leistungshalbleiterschalter Sₘ₁ und Sₘ₂ werden synchron durch das Steuergerät geschaltet, so dass auch der Stromfluss in den geteilten Wicklungen synchron ist, so dass sich die erzeugten magnetischen Induktionen überlagern. Dadurch ergeben sich zwei Gleichstrommotoren, die einen gemeinsamen Läufer aufweisen und auf die gleiche Welle einwirken, wobei die Abmessungen einem einzigen Gleichstrommotor entsprechen. Fällt nun beispielsweise ein Gleichspannungsbordnetz aus, so erzeugt das andere Gleichspannungsbordnetz dennoch ein Drehmoment an der Welle, so dass die beaufschlagte Radbremse betätigt wird. Wird nun jeder Radbremse eines Kraftfahrzeuges ein derartig verschalteter elektronisch kommutierter Gleichstrommotor zugeordnet, so werden auch bei Ausfall eines Bordnetzes alle Räder abgebremst, wobei sich der konstruktive Mehraufwand im Vergleich mit der Ausführung gemäß Fig. 3 in der Verdopplung der Leistungshalbleiter und der Verdrahtung erschöpft, wohingegen die mechanische Ausgestaltung unverändert bleibt. Hinsichtlich der Stromtragfähigkeit der Leistungshalbleiter Sₘₙ ist dabei anzumerken, dass diese 50% mehr Strom tragen müssen als die Leistungshalbleiter S1 - S6 gemäß Fig. 3.

Hinsichtlich der Dimensionierung sind die verschiedensten Varianten möglich. Im einfachsten Fall wird der Strom und die Erregerwicklungen Lₘₙ derart dimensioniert, dass jeder Zweig die Hälfte des Drehmomentes erzeugt, so dass bei Ausfall eines Bordnetzes an allen Rädern noch die Hälfte der maximalen Bremskraft zur Verfügung steht.

Prinzipiell ist die Aufteilung nicht auf zwei Gleichspannungsbordnetze 6, 7 beschränkt. In einer weiteren Ausführungsform kann zusätzlich beispielsweise das herkömmliche Kraftfahrzeugbordnetz mitintegriert werden. Entsprechend muss dann jede Erregerwicklung in drei Teil-Wicklungen unterteilt werden.

## Patentansprüche

1. Elektromechanische Bremsanlage, umfassend eine Anzahl von elektromechanischen Bremsen, denen jeweils mindestens ein Elektromotor zugeordnet ist und mindestens zwei unabhängige Spannungsversorgungen, **dadurch gekennzeichnet, dass** die Erregerwicklungen (L1 - L3) der Elektromotoren entsprechend der Anzahl der unabhängigen Spannungsversorgungen unterteilt sind, wobei jeweils ein Teil der Erregerwicklung mit jeweils einer der Spannungsversorgungen verbindbar ist.

2. Elektromechanische Bremsanlage nach Anspruch 1, dadurch gekennzeichnet, dass die Erregerwicklungen (L1 - L3) durch Abgriffe unterteilt sind.

3. Elektromechanische Bremsanlage nach Anspruch 1, dadurch gekennzeichnet, dass die Erregerwicklungen (L1 - L3) aus getrennten Wicklungen (L11, L12; L21, L22; L31, L32) gebildet sind, die über oder ineinander gewickelt sind.

4. Elektromechanische Bremsanlage nach einem der vorangegangenen Ansprüche, dadurch gekennzeichnet, dass die Elektromotoren als elektronisch kommutierte Gleichstrommotoren (1) ausgebildet sind.

5. Elektromechanische Bremsanlage nach einem der vorangegangenen Ansprüche, dadurch gekennzeichnet, dass die Versorgungs- und Datenleitungen eines Elektromotors zu einem gemeinsamen Strang vergossen sind.

6. Elektromechanische Bremsanlage nach einem der vorangegangenen Ansprüche, dadurch gekennzeichnet, dass die Spannungsversorgungen (6, 7) als 12V /14V oder 36V / 42V- Bordnetzspannungen ausgebildet sind.
